# EUROPEAN PATENT APPLICATION

(11) **EP 1 394 994 A2**
(43) Date of publication of application: **03.03.2004**
(21) Application number: 03255102.0
(22) Date of filing: 18.08.2003
(51) Int. Cl.: H04L 12/28

(54) **Data transmission system and wearable communications device**

(30) Priority: 30.08.2002 JP 2002253238; 24.01.2003 JP 2003016079
(71) Applicant: Seiko Instruments Inc., Chiba-shi, Chiba (JP)
(72) Inventor: Tsuji, Tomoharu, Seiko Instruments, Inc., Chiba-shi, Chiba (JP)
(74) Representative: Sturt, Clifford Mark

(57) **Abstract**

To prevent process centralization to a master unit at the time of communications channel setting to slave units. Included are: a plurality of biometric information detection devices (101a-101n) for detecting biometric information about a body such as heartbeat, and wirelessly transmitting corresponding biometric data; biometric information processing device (100) for receiving the biometric data from each of the biometric information detection devices (101a-101n), and going through various types of processes such as a display process; and an information processing unit for receiving the biometric data of the biometric information detection devices (101a-101n) from the biometric information processing device via a transmission/reception section (110a-110n). The biometric information detection devices (101a-101n) determine their own communications channels, and transmit the biometric data to the biometric information processing device (100).

## Description

The present invention relates to data transmission systems for wirelessly transmitting transmission data from a plurality of slave units to a master unit, and wearable communications devices suitable for the systems and, more specifically, to a data transmission system for wirelessly transmitting transmission data from a plurality of slave units to a master unit under TDMA (Time Division Multichannel Access) scheme, and a wearable communications device suitable for the system.

Data transmission systems conventionally used are those for wirelessly transmitting transmission data from a plurality of slave units to a master unit (for example, refer to Patent Literature 1, Patent Literature 2).

As an example of the data transmission system of the above type, there is a portable biometric information processing system for detecting, for processing, biometric information such as a user's heartbeat.

Such a portable biometric information processing system includes a biometric information processing device being a master unit, and one or more of biometric information detection devices each being a slave unit. At least the slave unit is attached to a user's body for use.

The biometric information processing device and the biometric information detection device(s) are wirelessly connected to one another under TDMA scheme, and biometric information detected by each of the detection devices is wirelessly transmitted to the biometric information processing device as transmission data.

The biometric information detection devices are each turned ON by a power supply button or by attaching those to bodies, and the like. Also, the biometric information processing device is set in a state of communications detection by a specific mode, for example, before starting communications. At the time of starting communications, the biometric information detection device executes a process of transmitting biometric information every time a communications time comes set to a predetermined time (for example, 1 second).

The biometric information processing device turns ON the reception section under the state of communications detection, and scans the biometric information detection device (s). When detecting any biometric information detection device, the biometric information processing device turns ON the reception section at regular time intervals, and receives the biometric information from the biometric information detection device(s).

In such a manner, the biometric information detection devices each transmit the biometric information using a channel not competing with channels used by other biometric information detection devices, and the biometric information processing device can go through various types of processes of the above-mentioned biometric information by receiving the biometric information coming from a plurality of biometric information detection devices. As the above-mentioned processes performed by the biometric information processing device, for example, there is a process of displaying biometric data received from each of the biometric information detection devices, or a process of saving the biometric data.

### [Patent Literature 1]

JP-A-5-191391

### [Patent Literature 2]

JP-A-11-331961

As described above, the portable biometric information processing system of the above-mentioned conventional type performs transmission and reception of biometric data in a time sharing manner under TDMA scheme. Therefore, the larger number of biometric information detection devices causes such aproblem of communications interference occurring among the biometric information detection devices. Further, there is another problem that interference with other wireless communications devices easily occurs.

Moreover, the biometric information processing device is so structured as to centrally control a TDMA channel of the respective biometric information detection devices, for example, the biometric information processing device sets a TDMA channel with respect to each of the biometric information detection devices. As a result, this places a heavy load on the biometric information processing device.

Accordingly, when not only the biometric information detection device(s) but also the biometric information processing device use battery as power source, it causes such a problem of considerably shortening the battery's useful life in the biometric information processing device.

As a solution for this problem, increasing the battery of the biometric information processing device is apossibility. However, this causes the size of the biometric information processing device to be immensely large.

A problem similarly to the above occurs to data transmission systems other than the biometric information processing systems.

An object of the present invention is to provide a data transmission system capable of preventing process centralization to a master unit at the time of communications channel setting to a slave unit(s).

Another object of the present invention is to provide a data transmission system having good noise resistance.

Still another obj ect of the present invention is to provide a data transmission system capable of accommodating many slave units.

According to the present invention, in a data transmission system for wirelessly transmitting, under TDMA scheme, transmission data from a plurality of slave units to a master unit, provided is a. data transmission system characterized in that each of the slave units includes communications means for performing signal transmission and reception with the master unit, and control means for setting, when the communications means does not detect a signal longer than a predetermined length of time, an own communications channel within the predetermined length of time in a frame to transmit transmission data to the master unit using the communications channel. The control means sets, when the communications means does not detect a signal longer than apredetermined length of time, an own communications channel within the predetermined length of time in a frame to transmit transmission data to the master unit using the communications channel by the communications means.

Herein, in an alternative structure, the control means of each of the slave units may transmit identification information to the master unit, and also may transmit the transmission data to the master unit after receiving an enabling signal from the master unit, and when determining that the identification information received from each of the slave units is normal identification information, the master unit may transmit the enabling signal to any of the slave units corresponding to the identification information.

In still another alternative structure, when receiving the enabling signal in a first reception period of a predetermined time width provided before an information transmission period in which the transmission data is transmitted, the control means of each of the slave units may transmit the transmission data to the master unit.

In still another alternative structure, storage means may be included for storing a channel change condition, and in a second reception period of a predetermined time width provided after the first reception period or the information transmission period, the control means of each of the slave units may change the communications channel when detecting that the channel change condition previously set in the storage means is satisfied.

In still another alternative structure, the channel change conditions of the first reception period and that of the second reception period may be so set as to be different from each other.

In still another alternative structure, the channel change condition is an interference detection frequency in the first reception period and the second reception period, and as the channel change condition, the interference detection frequency in the first reception period and that of the second reception period are set to each different number.

In still another alternative structure, storage means may be included for storing a channel shift condition, and in a third reception period of a predetermined time width provided after the information transmission period, when detecting that the channel shift condition is satisfied, the control means of each of the slave units shifts its communications channel by a predetermined length of time.

In still another alternative structure, the first reception period may be so set as to be different from a total lengthof the second reception period and third reception period.

In still another alternative structure, when detecting any interference at least in the first reception period, the control mans of each of the slave units may not transmit the transmission data to the master unit.

In still another alternative structure, each of the slave units may include a sensor attached to a body for use and for detecting biometric information about the attaching body, and the control means may wirelessly transmit the biometric information detected by the sensor as the transmission data using the communications means, and the master unit may include communications means for wirelessly receiving the transmission data coming from each of the slave units, and processing means for processing the transmission data received from each of the slave units.

In still another alternative structure, an information processing device maybe included for receiving the transmission data from the master unit, and the information processing device may transmit a synchronizing signal with given cycles, and the master unit may include a reception period synchronous with each of the synchronizing signals for receiving the synchronizing signals in each of the reception periods.

In still another alternative structure, the master unit may include storagemeans for storing at least the identification information, and when receiving the synchronizing signal including the identification information stored in the storage means, the communications means of the master unit may set itself a reception period of a timing synchronous with the synchronizing signal.

In still another alternative structure, when receiving the synchronizing signal through a time-continuous scanning operation, the communications means of the master unit may set itself the reception period of the timing synchronous with the synchronizing signal.

In still another alternative structure, when receiving the synchronizing signal through the scanning operation for a plurality of times with predetermined cycles, the communications means of the master unit may set itself the reception period of the timing synchronous with the synchronizing signal.

In still another alternative structure, the information processing device may transmit a data request signal at a timing synchronous with the synchronizing signal, and the storage means of the master unit may include the transmitting data stored therein, and in response to the data request signal received in the reception period, the communications means of the master unit may transmit the data stored in the storage means-In still another alternative structure, after receiving from the master unit a data transmission completion signal and transmitting an acknowledgement signal, the information processing device may transmit the synchronizing signal with the predetermined cycles, and after transmitting the data transmission completion signal and receiving the acknowledgement signal subsequent to completion of data transmission, the communications means of the master unit may set itself the reception period synchronous with the synchronizing signal.

Further, according to the present invention, in a wearable communications device attached to a body for use, and for wirelessly transmitting, under TDMA scheme, transmission data to a master unit, provided is a wearable communications device characterized in including communications means for performing signal transmission and reception with the master unit, and control means for setting, when the communications means does not detect a predetermined signal longer than a predetermined length of time, an own communications channel within the predetermined length of time in a frame to transmit transmission data to the master unit using the communications channel by the communications means. When the communications means does not detect a predetermined signal longer than a predetermined length of time, the control means sets an own communications channel within the predetermined length of time in a frame to transmit transmission data to the master unit using the communications channel by the communications means.

Herein, in an alternative structure, the control means may transmit identification information to the master unit, and also may transmit the transmission data to the master unit after receiving an enabling signal from the master unit.

In a still alternative structure, when receiving the enabling signal in a first reception period of a predetermined time width provided before an information transmission period in which the transmission data is transmitted, the control means may transmit the transmission data to the master unit.

In a still alternative structure, storage means may be included for storing a channel change condition, and in a second reception period of a predetermined time width provided after the first reception period or the information transmission period, the control means may change the communications channel when detecting that the channel change condition previously set in the storage means is satisfied.

In a still alternative structure, the channel change condition of the first reception period and that of the second reception period are so set as to be different from each other.

In a still alternative structure, the channel change condition is an interference detection frequency in the first reception period and the second reception period, and as the channel change condition, the interference detection frequency in the first reception period and that of the second reception period may be set to each different number.

In a still alternative structure, storage means may be included for storing a channel shift condition, and in a third reception period of a predetermined time width provided after the information transmission period, when detecting that the channel shift condition is satisfied, the control means may shift its communications channel by a predetermined length of time.

In a still alternative structure, the first reception period may be so set as to be different from a total length of the second reception period and third reception period.

In a still alternative structure, when detecting any interference at least in the first reception period, the control means may not transmit the transmission data to the master unit.

In a still alternative structure, a sensor maybe included for being attached to a body for detecting biometric information thereabout, and the control means may wirelessly transmit the biometric information detected by the sensor as the transmission data using the communications means.

Embodiments of the invention will now be described by way of further example only and with reference to the accompanying drawings, in which:
Fig. 1 is a block diagram showing a portable biometric information processing system according to an embodiment of the present invention;
Fig. 2 is a timing chart showing signal transmission timings of the portable biometric information processing system according to the embodiment of the present invention;
Fig. 3 is a timing chart for demonstrating the operation of the portable biometric information processing system according to the embodiment of the present invention;
Fig. 4 is a timing chart for demonstrating the operation of the portable biometric information processing system according to the embodiment of the present invention;
Fig. 5 is a timing chart for demonstrating the operation of the portable biometric information processing system according to the embodiment of the present invention;
Fig. 6 is a timing chart for demonstrating the operation of the portable biometric information processing system according to the embodiment of the present invention;
Fig. 7 is a timing chart for demonstrating the operation of the portable biometric information processing system according to the embodiment of the present invention, and a timing chart showing the operation at the time when interference occurs in a guardband;
Fig. 8 is a timing chart for demonstrating the operation of the portable biometric information processing system according to the embodiment of the present invention, and a timing chart showing the operation at the time when interference occurs in a guardband;
Fig. 9 is a timing chart for demonstrating the operation of the portable biometric information processing system according to the embodiment of the present invention, and a timing chart showing the operation at the time when interference occurs in a guardband;
Fig. 10 is a timing chart showing a first embodiment of a synchronous operation in the portable biometric information processing system according to the embodiment of the present invention;
Fig. 11 is a timing chart showing a second embodiment of a synchronous operation in the portable biometric information processing system according to the embodiment of the present invention;
Fig. 12 is a timing chart showing a synchronous state in the portable biometric information processing system according to the embodiment of the present invention;
Fig. 13 is a timing chart showing the entire data transmission operation in the portable biometric information processing system according to the embodiment of the present invention; and
Fig. 14 is a timing chart showing a part of the data transmission operation in detail in the portable biometric information.processing system according to the embodiment of the present invention.

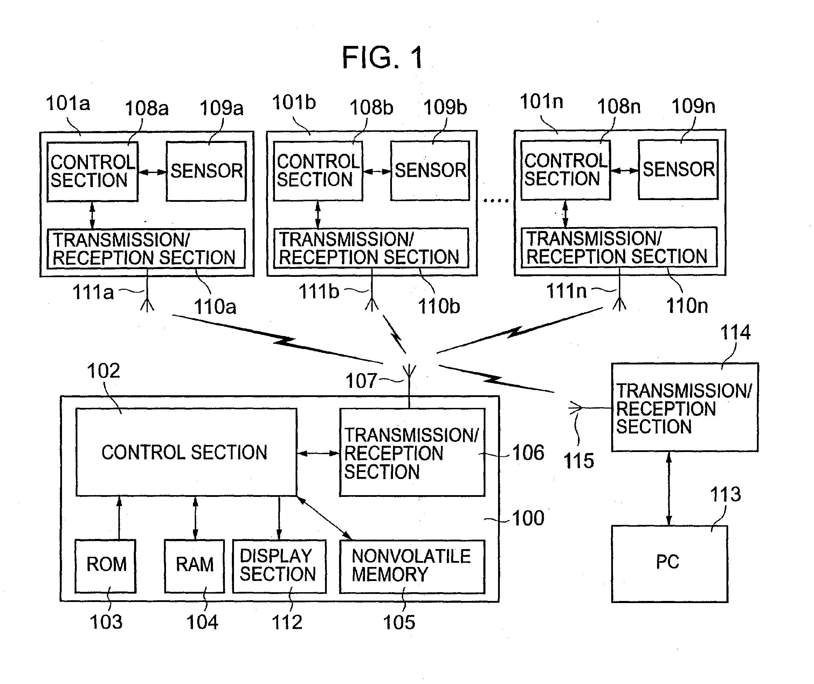

Fig. 1 is a block diagram showing a data transmission system according to embodiments of the present invention, and shows an exemplary portable biometric information processing system. Here, the portable biometric information processing system is a system so structured as to include a biometric information processing device as a mater unit and a plurality of biometric information detection devices as slave units, and therein, at least the above-mentioned biometric information detection devices are each attached to a body for use, biometric information detected by a sensor provided for each of the above-mentioned biometric information detection devices is wirelessly transmitted to the above-mentioned biometric information processing device under TDMA (Time Division Multichannel Access) scheme, and the above-mentioned biometric information processing device goes through various types of processes, e.g., a process of displaying the biometric information, a process of saving the same.

In Fig. 1, the portable biometric information processing system includes a biometric information processing device 100 as a master unit, and a plurality of biometric information detection devices 101a to 101n being slave units and wearable communications devices.

The biometric information processing device 100 includes a control section 102 as control means, read-only memory (ROM) 103, random access memory (RAM) 104, nonvolatile memory 105, and a transmission/reception section 106 as communications means, an antenna 107, and a display section 112.

The control section 102 is structured by a central processing unit (CPU), and by executing a program previously stored in the ROM 103, applies control to communications performed by the transmission/reception section 106 among the biometric information detection devices 101a to 101n, and goes through various types of processes such as a process of displaying, with respect to the display section 112, biometric information received from the each of the biometric information detection devices 101a to 101n.

The memory 104 stores the biometric information received from the biometric information detection devices 101a to 101n. Also, the nonvolatile memory 105 stores an identification code previously provided to each of the biometric information detection devices 101a to 101n, and if necessary, stores the biometric information received from the biometric information detection devices 101a to 101n. Note here that, the ROM 103, the RAM 104, and the nonvolatile memory 105 all structure storage means.

Herein, the biometric information processing device 100 can be so structured as to be attachable to a user's arm, for example, for use, or to be set at a predetermined place for use.

A plurality of biometric information detection devices 101a to 101n are all in the same structure, and respectively, include control sections 108a to 108n as control means, sensors 109a to 109n for each detecting a user' s biometric information such as heartbeat, transmission/reception sections 110a to 110n as communications means, and antennas 111a to 111n.

Although details are left for later description, the biometric information detection devices 101a to 101n are each used by being attached to the user's body. Biometric data derived by detection made by the sensors 109a to 109n such as heartbeat sensors is transmitted, under the control of the control sections 108a to 108n, to the biometric information processing device 100 as transmission data via the transmission/reception sections 110a to 110n, and the antennas 212a to 111n. The biometric information detection devices 101a to 101n and the biometric information processing device 100 perform transmission and reception of the transmission data under TDMA scheme.

The biometric information processing device 100 stores the biometric data received from each of the biometric information detection devices 101a to 101n in the RAM 104, and also displays the same on the display section 112. Through display of the above-mentioned display section 112, the manager who owns the biometric information processing device 100 (or users themselves wearing the biometric information detection devices 101a to 101n) can know the exercise amount, physical condition, and the like, of the users (or themselves) who are wearing the biometric information detection devices 101a to 101n.

The portable biometric information processing system can be so structured as to include an information processing unit 113 configured by a computer device of aportable or stay-at-home type, a transmission/reception section 114 and an antenna 115 as communications means.

If this is the case, the information processing unit 113 may receive, from the biometric information processing device 100 via the antenna 115 and the transmission/reception section 114, the biometric data of the biometric information detection devices 101a to 101n stored in the RAM 104, and go through various types of processes such as a process of displaying the biometric data from the respective biometric information detection devices 101a to 101n, and a comparison process. Alternatively, the information processing unit 113 may directly receive the biometric data from the biometric information.detection devices 101a to 101n via the antenna 115 and the transmission/reception section 114, and go through various types of processes such as a process of displaying the biometric data from the respective biometric information detection devices 101a to 101n, and a comparison process. Note here that, in Fig. 1, the transmission/reception section 114 may be separately structured from the information processing unit 113, or integrally therewith.

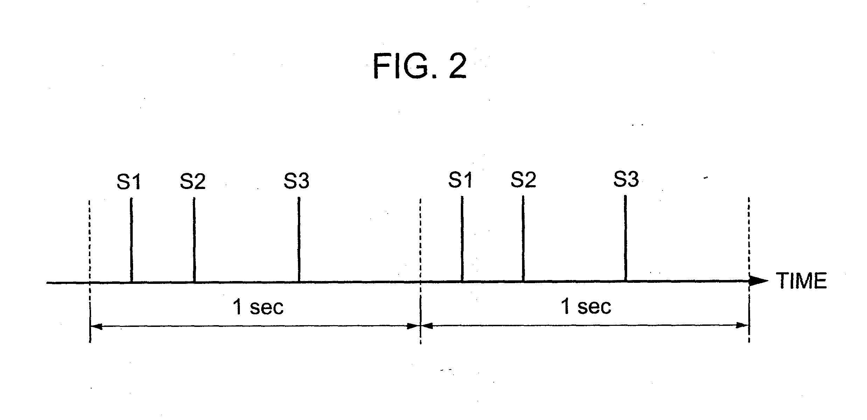

Fig. 2 is a diagram showing signal transmission timings of the portable biometric information processing system shown in Fig. 1. Each of the biometric information detection devices 101a to 101n performs transmission and reception of signals such as data between the biometric informationprocessing device 100 under TDMA scheme.

In Fig. 2, S1, S2, and S3 denote channels used by the biometric information detection devices 101a, 101b, and 101n, respectively, for signal transmission and reception with the biometric information processing device 100, and the entire signal transmission period (1 frame) is set to a second.

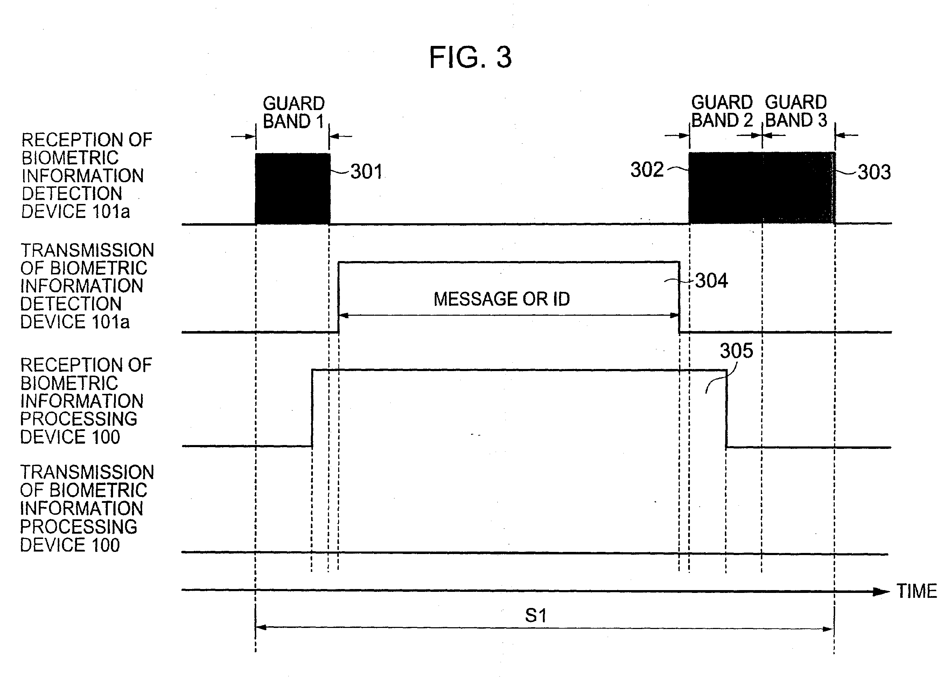

Fig. 3 is a timing chart showing, in the portable biometric information processing system of Fig. 1, signal transmission/reception timings between the biometric information detection devices 101a to 101n and the biometric information processing device 100.

The channels S1 to S3 for signal transmission and reception among the biometric information detection devices 101a to 101n and the biometric information processing device 100 are all in the same structure, and Fig. 3 shows a timing of the channel S1 at the time of transmission and reception. between the biometric information detection device 101a and the biometric information processing device 100.

The biometric information detection devices 101a to 101n operate in the similar manner, and thus in the below, the operation of the biometric information detection device 101a is described but not the operation of other biometric information detection devices 101b and 101n, and only when considered necessary for understanding of the operation of the present embodiment, the operation of other biometric information detection devices 101b and 101n is described.

In Fig. 3, the time width structuring the channel S1 (channel time width) includes a first guardband (GuardBand1) 301 being a first reception period of a first predetermined time width, an information transmission period 304 for transmitting a message (Message) such as biometric data or an identification code (ID) inherent to the biometric information detection device 101a, a second guardband (GuardBand2) 3 02 being a second reception period of a second predetermined time width, and a third guardband (GuardBand3) 303 being a third reception period of a third predetermined time width.

The first guardband 301 is provided before the information transmission period 304, the second guardband 302 is provided after the information transmission period 304, and the third guardband 303 is provided after the second guardband.302. The time width of the first guardband 301 is so set as to be different from the sum of the time width of the second guardband 302 and the time width of the third guardband 303. In this manner, as will be described later, such a situation that a plurality of biometric information detection devices 101a to 101n simultaneously go through a channel change process is prevented.

When having the biometric information processing device 100 verify its own identification code (at the time of identification code verification), the biometric information detection device 101a transmits, in the information transmission period 304, an inherent identification code previously stored in the control section 108a in the biometric information detection device 101a. When transmitting the detected biometric information (at the time of transmission of biometric information), the biometric information detection device 101a transmits, in the information transmission period 304, biometric information about a body detected by the sensor 109a as biometric data.

In an information reception period 305 covering the latter half of the first guardband 301 to the first half of the second guardband 302, the biometric information processing device 100 receives the biometric data or the identification code each coming from the biometric information detection device 101a.

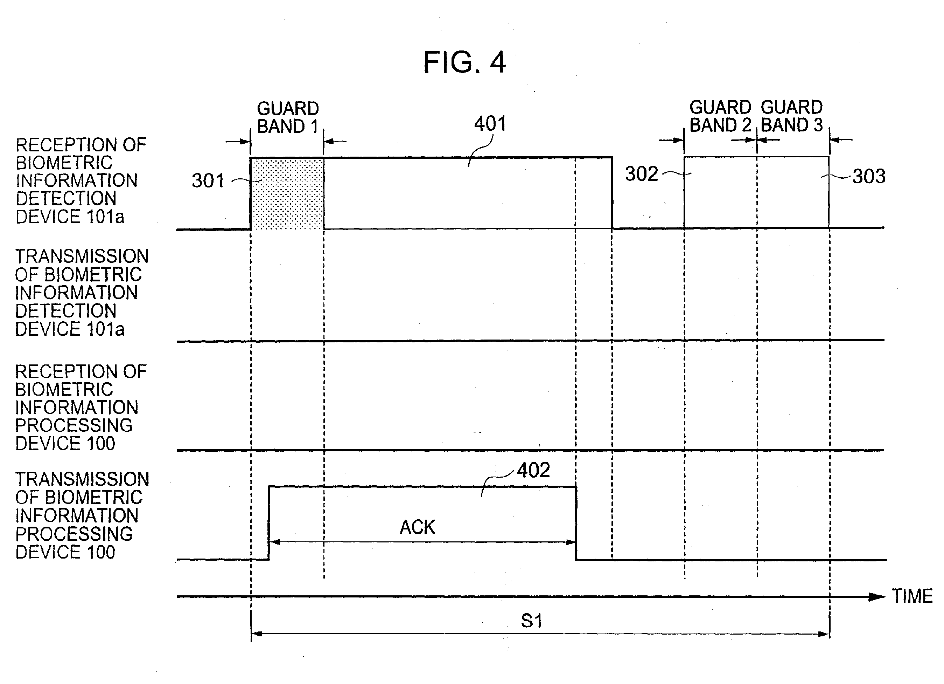

Fig. 4 is a timing chart showing, in the portable biometric information processing system of Fig. 1, a process of identification code verification among the biometric information detection devices 101a to 101n and the biometric information processing device 100. Herein, Fig. 4 shows an example of the channel S1 similarly to Fig. 3, and any part identical to that of Fig. 3 is provided with the same reference numeral.

In Fig. 3, upon reception of an identification.code from the biometric information detection device 101a, the biometric information processing device 100 determines if it is matching with the identification code of the biometric information detection device 101a previously stored in the nonvolatile memory 105, that is, determines if that identification code is an appropriate identification code. If determined appropriate, an enabling signal (ACK) 402 is transmitted from the control section 102 via the transmission/reception section 106 and the antenna 107. The enabling signal 402 is a signal encoded by the identification code of the biometric information detection device 101a.

Upon reception of the enabling signal in the first guardband 301, the biometric information detection section 101a successively receives the enabling signal 402 also in the information reception period 401. The biometric information detection device 101a decodes the enabling signal 402 by using its own identification code previously stored in the control section 108a, and then determines whether it is the enabling signal addressed thereto.

The enabling signal 402 is a signal encoded by the identification code of the biometric information detection device 101a. Thus, although there is a possibility that the enabling signal 402 is received by all of the biometric information detection devices 101a to 101n, only the biometric information detection device 101a having the identification code encoded with the enabling signal 402 can know that the enabling signal is the one addressed thereto.

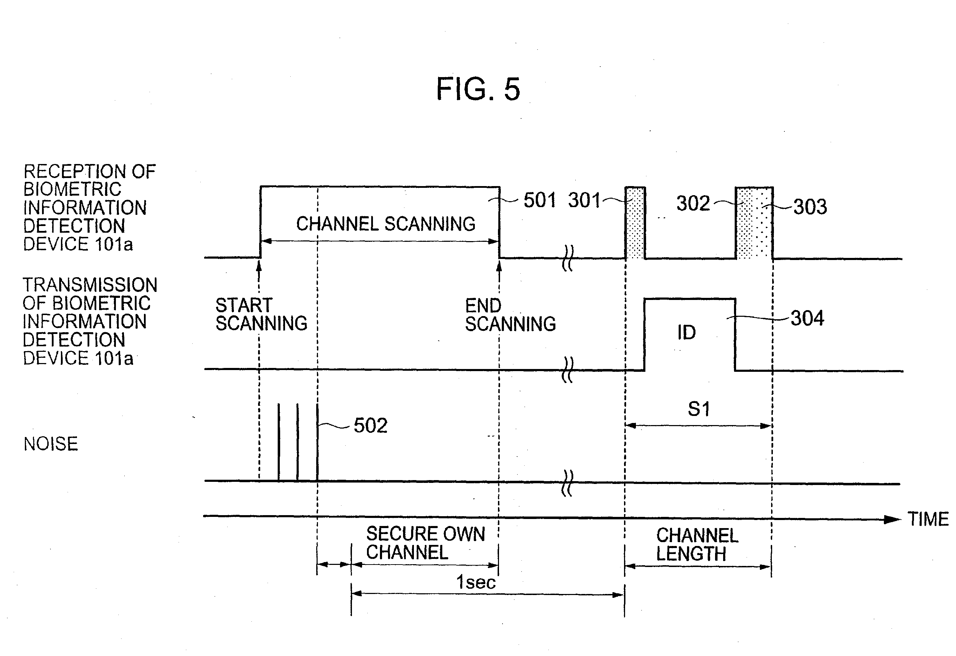

Fig. 5 is a timing chart, in the portable biometric information processing system of Fig. 1, showing the operation of the biometric information detection devices 101a to 101n for communications channel determination. The communications channel determination process is executed when the biometric information detection devices 101a to 101n and the biometric information processing device 100 are turned ON, or when any communications interference occurs as will be described later. Herein, Fig. 5 shows an example of the channel S1 similar to Fig. 3 and Fig. 4, and any part identical to that of Fig. 3 and Fig. 4 is provided with the same reference numeral.

In Fig. 5, in a reception period (channel scanning period) 501 of a predetermined time width for executing the channel determination process, the biometric information detection device 101a detects any vacant channel (channel including no signal) to execute a process of determining its own .communications channel (channel scanning process).

In detail, in the channel scan period 501, after finishing detection of a signal 502 other than a normal signal such as an enabling signal (signal other than a predetermined signal, for example, extraneous noise), if detecting a duration of no signal longer than a predetermined channel time width (Channel Length), the control section 108 of the biometric information detection device 101a sets its own communications channel to the above-mentioned channel time width. The channel time width is structured by, as shown in Fig. 3, the guardband 301, the information transmission period 304, the guardband 302, and the guardband 303. Hereinafter, the biometric information detection device 101a uses the channel determined as such for communications with the biometric information processing device 100. Other biometricinformation detection devices 101b and 101n determine their own channels in a similar manner. As such, the biometric information detection devices 101a to 101n determine their own communications channels, whereby the load on the biometric information processing device 100 can be reduced.

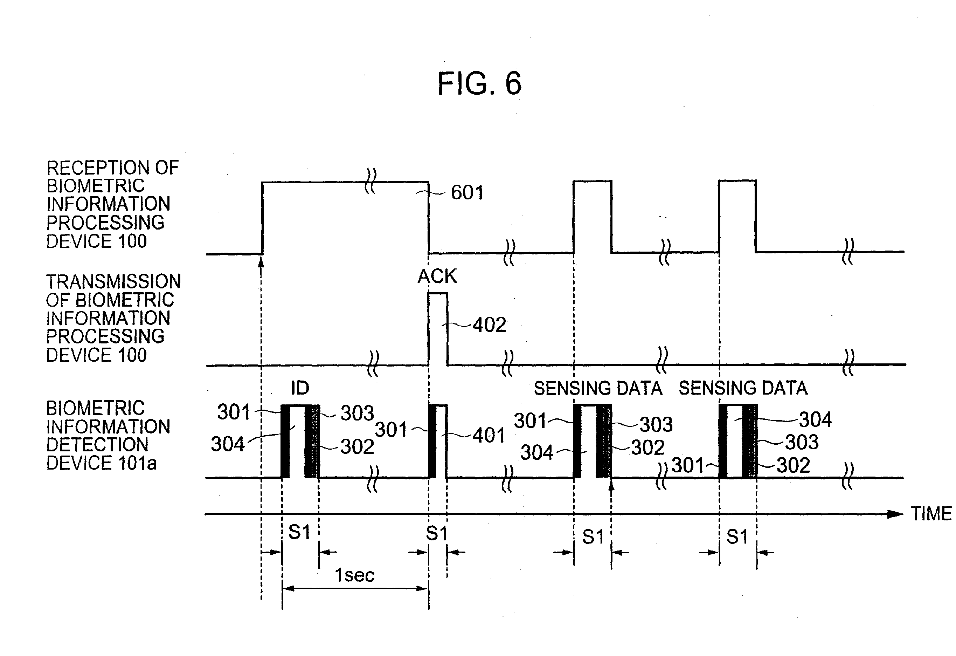

Fig. 6 is a timing diagram, in the portable.biometric information processing system of Fig. 1, showing timings of a duration before each of the biometric information detection devices 101a to 101n transmits the biometric data but after the biometric information processing device 100 executing a process of verifying each of the biometric information processing devices 101a to 101n by scanning the biometric information detection devices 101a to 101n. Herein, Fig. 6 shows an example of the channel S1 similarly to Figs. 3 to 5, and any part identical to that of Fig. 3 to Fig. 5 is provided with the same reference numeral.

In Fig. 6, in a reception period (search scanning period) 601 in which scanning is performed to detect the biometric information detection devices 101a to 101n, the biometric information processing device 100 operates to receive signals coming from the biometric information detection devices 101a to 101n.

The biometricinformation detection device 101a transmits the identification code using the channel S1. The identification code is transmitted to the information transmission period 304 provided between the guardband 301 and the guardband 303. Here, immediately after the guardband 302, the guardband 303 is provided.

In the search scanning period 601, the biometric information processing device 100 receives, from the biometric information detection device 101a, the identification codes of the biometric information detection device 101a, and if determining the identification code as being a normal identification code, transmits the enabling signal 402 encoded by the identification code of the biometric information detection device 101a.

Upon reception of the enabling signal 402, the biometric information detection device 101a detects that the enabling signal 402 is the enabling signal encoded by its own identification code, and thus determines that the verification process with respect to itself is through, and thereafter, transmits the biometric data 304 using the channel S1.

The biometric data 304 is data derived by encoding the biometric information of the body detected by the sensor 109a by the control section 108a using its own identification code, and is to be transmitted to the information transmission period 304 provided between the guardband 301 and the guardband 303.

The biometric information processing device 100 receives the biometric data 304 transmitted from the biometric information detection device 101a, and goes through various types of processes such as a display process.

Next, in the portable biometric information processing system of Fig. 1, described is the operation in a case of interference occurring among the biometric information detection devices 101a to 101n, or in a case of receiving noise interference from outside.

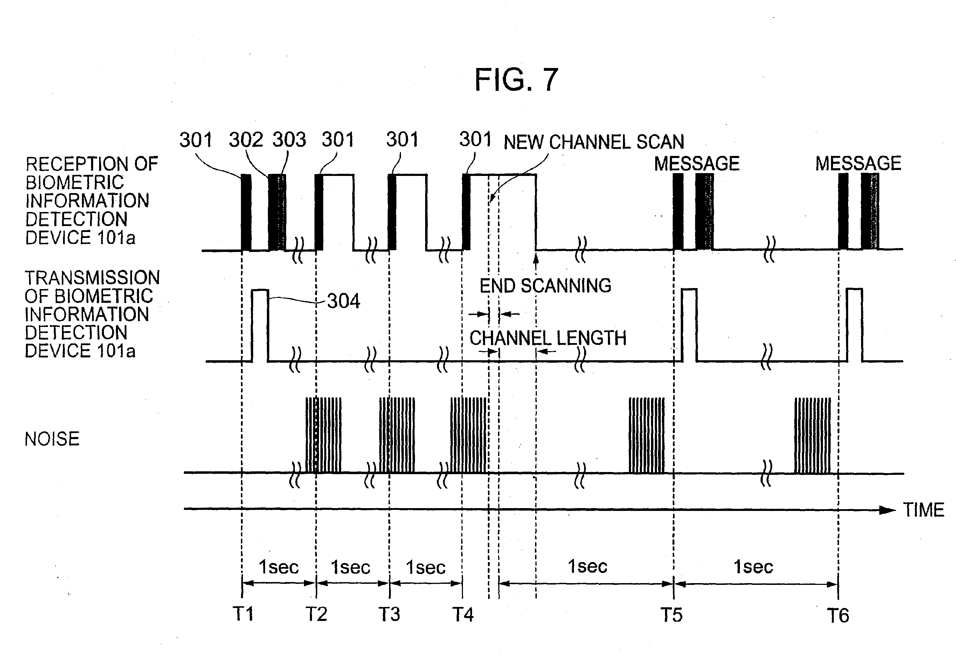

Fig. 7 is a timing chart showing the operation in a case where interference occurs in the guardband 301 in the embodiment of the present invention. Herein, Fig. 7 shows an example of the channel S1 similarly to the above, and any part identical to that of Fig. 3 to Fig. 6 is provided with the same reference numeral.

In Fig. 7, the control section 108a of the biometric information detection device 101a does not receive interference (signal interference with other biometric information detection devices 101a and 101n or interference with extraneous noise) in the guardband 301 at time T1, and thus transmits the biometric data in the information transmission period 304.

Under this state, the control section 108a determines whether or not a first channel change condition previously stored in the control section 108a is satisfied. In the present embodiment, as the first channel change condition, such a condition that the interference frequency in the guardband 301 is three times is stored in the control section 108a.

In such a case, when detecting any interference in the guardband 301 at times T2, T3, and T4, that is, when detecting interference for a first predetermined number of times (three times in the present embodiment) successively in the guardband 301, the control section 108a determines that the first channel change condition is satisfied, and in the above-described manner, carries out a channel change operation by looking for any new channel and keeping the same through channel scanning. After looking for any new channel at a timing causing no interference and keeping the same, as shown at times T5 and T6, the control section 108a transmits the biometric data using thus found and kept channel.

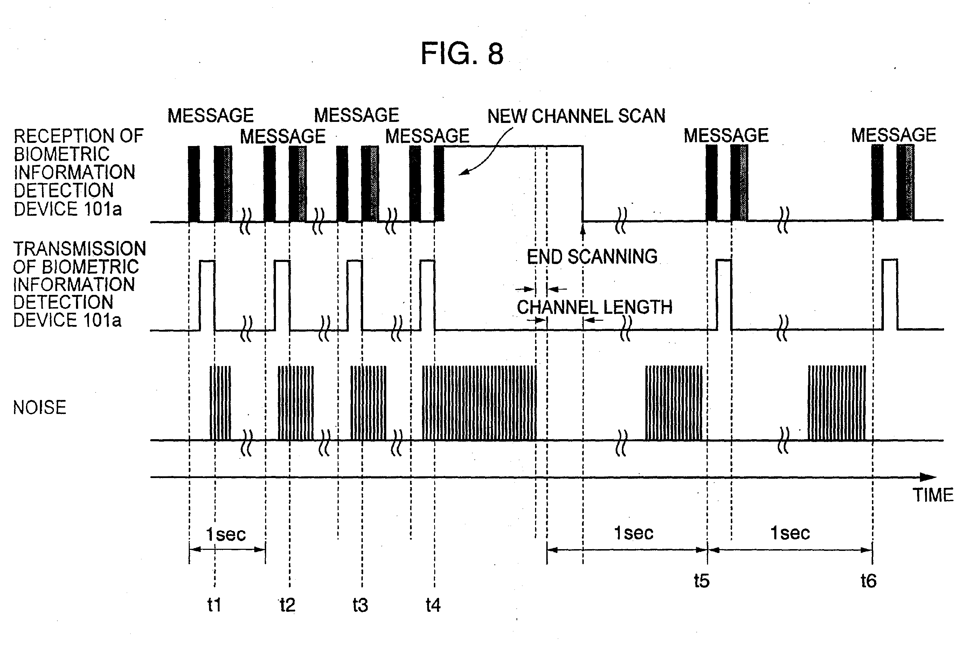

Fig. 8 is a timing chart showing the operation when interference occurs in the guardband 302 in the embodiment of the present invention. Herein, Fig. 8 shows an example of the channel S1 similarly to the above, and any part identical to that of Figs. 3 to 7 is provided with the same reference numeral.

Under this state, the control section 108a determines whether or not a second channel change condition previously stored in the control section 108a is satisfied. In the present embodiment, as the second channel change condition, such a condition that the interference frequency in the guardband 302 is four times is stored in the control section 108a.

In Fig. 8, when detecting any interference in the guardband 302 at times t1, t2, t3, and t4 for a second predetermined number of times (four times in the present embodiment), the control section 108a of the biometric information detection device 101a determines that the second channel change condition is satisfied, and in the above-described manner, carries out a channel change operation by looking for any new channel and keeping the same through channel scanning. After found any new channel and keeping the same, the control section 108a transmits the biometric data using the channel (see times t5 and t6).

The second channel change condition based on the interference in the guardband 302 and the first channel change condition based on the interference in the guardband 301 are so set as to be different from each other. That is, in the present embodiment, the second predetermined number of times is so set as to be different from the first predetermined number of times.

In this manner, such a situation that a plurality of biometric information detection devices 101a to 101n simultaneously detect interference, and simultaneously go through a channel change process can be prevented. That is, if the channel change condition based on the interference in the guardband 302 and the channel change condition based on the interference in the guardband 301 are set to be the same, considered is a case where a plurality of biometric information detection devices 101a to 101n detect the same interference (noise), and perform the channel change operation at the same time. If this is the case, there is a possibility that the biometric information detection devices 101a to 101n may cause interference again using any new channel after channel change. In the present embodiment, the first and second channel change conditions are set different, and thus such a situation that a plurality of biometric information detection devices 101a to 101n simultaneously go through channel change can be prevented.

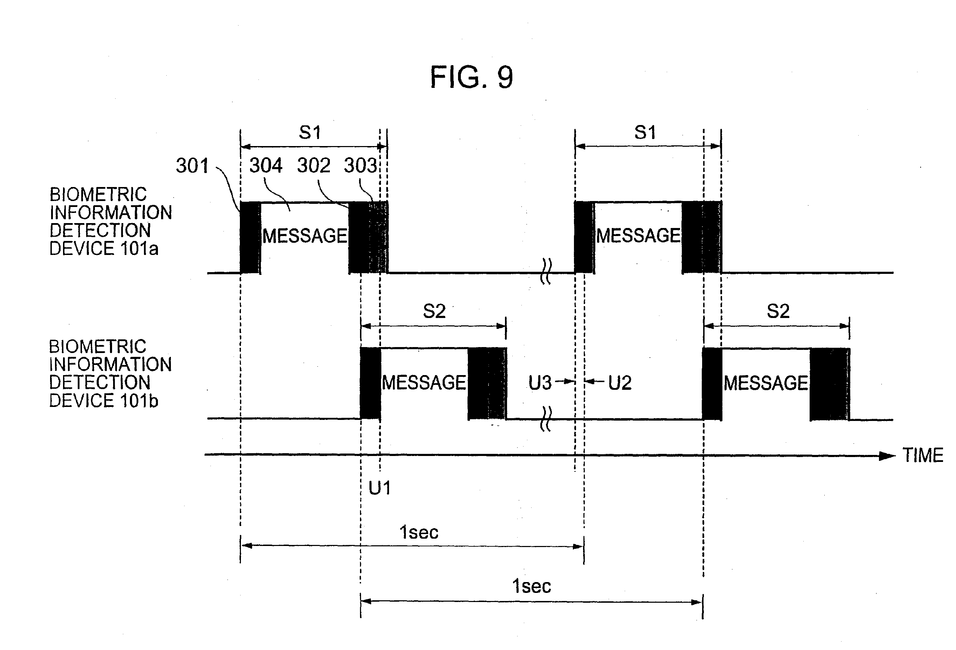

Fig. 9 is a timing chart showing the operation of a case where interference occurs in the guardband 303 in the embodiment of the present invention. Here, any part identical to that of Fig. 3 to Fig. 8 is provided with the same reference numeral.

In Fig. 9, presumably, the biometric information detection devices 101a and 101b transmit, respectively, biometric data to the biometric information processing device 100 using the channels S1 and S2.

In this state, presumably, interference occurs between the biometric information detection device 101a and the biometric information detection device 101b, and at time U1, the control section 108a of the biometric information detection device 101a detects the biometric data of the biometric information detection device 101b in the guardband 303. After detecting the interference in the guardband 303, the control section 108a determines that the interference is the one occurred with other biometric information detection devices 101b and 101n, and determines that loss of synchronism is caused.

If determining that loss of synchronism is caused, the control section 108a performs shifting to make the timing of the channel S1 come earlier in the next frame by a predetermined time width (e.g., a few clocks, or the time width of the guardband 303). In detail, in Fig. 9, the guardband starting time of the channel S1 is shifted from U2 to U3. This prevents interference between the biometric information detection device 101a and the biometric information detection device 101b.

Note here that, if interference occurs yet even after shifting is done in the above-mentioned manner, shifting is done again by the same amount, and thereafter, interference is prevented between the biometric information detection device 101a and the biometric information detection device 101b by repeating as such. As such, when interference occurs among the biometric information detection devices 101a to 101n, by continuously shifting a predetermined amount, time interval can be narrowed down without interference caused by the biometric information detection devices 101a to 101n. Accordingly, in the present system, in a short frame, it becomes possible to accommodate more of the biometric information detection devices 101a to 101n.

Next, described is the operation of the biometric information processing device 100 at the time of transmitting, to the information processing unit 113, data received from each of the biometric information detection devices 101a to 101n and stored in the RAM 104.

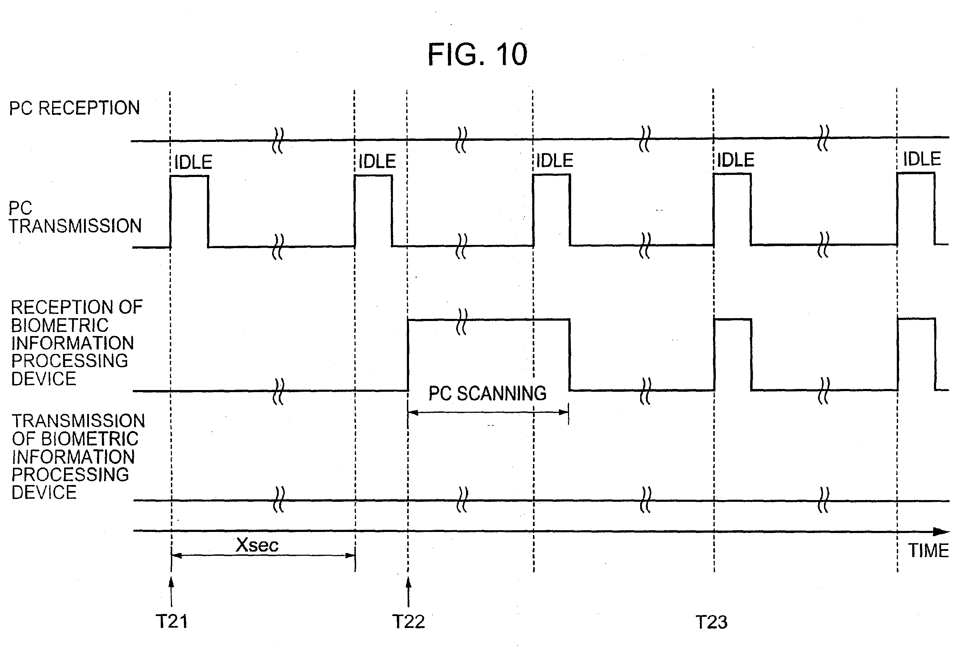

Fig. 10 is a timing chart showing signal transmission timings according to a first embodiment of theportablebiometric information processing system of Fig. 1, and a timing chart showing the process at the time of establishing communications synchronization.between the biometric information processing device 100 and the information processing unit 113.

In Fig. 10, after starting application software for data transmission and reception at tine T21, the information processing unit 113 starts transmitting a synchronizing signal (idle) at a predetermined cycle of X second (1 second in the present embodiment). The synchronizing signal is a signal including identification information inherent to the information processing unit 113, and information telling that it is a synchronizing signal.

At time T22, after receiving the synchronizing signal by going through the time-sequential scanning operation (PC scanning), the transmission/reception section 106 of the biometric information processing device 100 being communications means sets itself a reception period of a timing synchronous with each of the synchronizing signals. The transmission/reception section 106 sets the cycle of the reception period to be the same cycle of X second (1 second in the present embodiment) as the synchronizing signal. With sucha setting, the synchronizing signal and the reception period synchronize with each other, and the transmission/reception section 106 receives the synchronizing signal coming from the informationprocessingunit 113 ineachof thereceptionperiods.

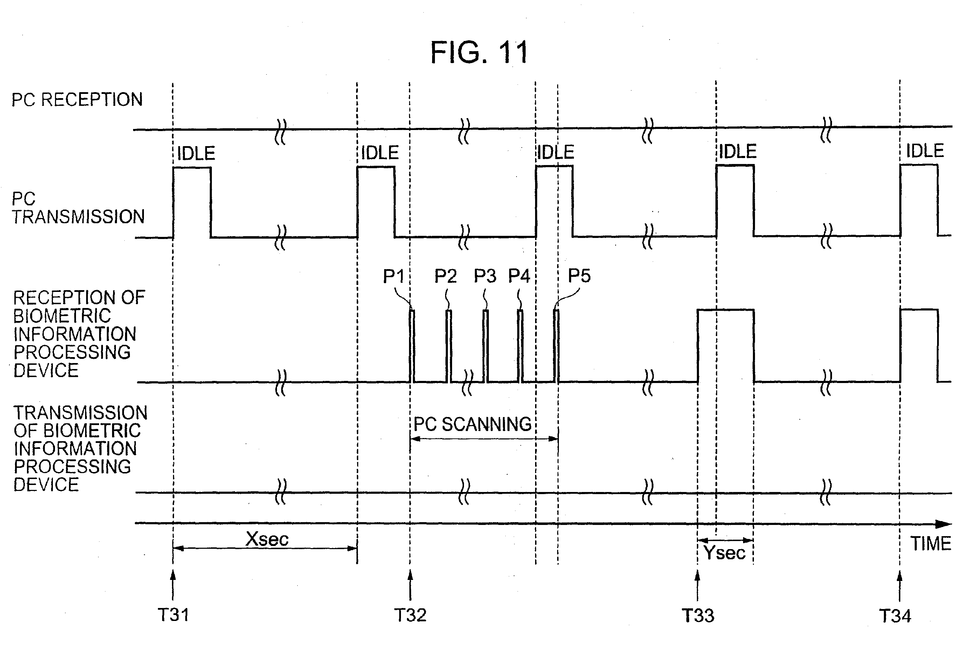

Fig. 11 is a timing chart showing signal transmission timings according to a second embodiment of the portable biometric information processing system shown in Fig. 1, and a timing chart showing the process at the time of establishing communications synchronization between the biometric information processing device 100 and the information processing unit 113.

In Fig. 11, after starting application software for data transmission and reception at tine T31, the information processing unit 113 starts transmitting a synchronizing signal (idle) after a predetermined cycle of X second (1 second in the present embodiment). The synchronizing signal is a signal including identification information inherent to the information processing unit 113, and information telling that it is a synchronizing signal.

At time T32, after receiving the synchronizing signal by going through the scanning operation (PC scanning) for a plurality of times with the predetermined cycles (five times of scanning timing P1 to P5 in the present embodiment), the transmission/reception section 106 of the biometric information processing device 100 sets itself a reception period of a timing synchronous with each of the synchronizing signals.

At this time, because it is unknown which position of the synchronizing signal is detected at scanning timing P5, the transmission/reception section 106 sets itself, as a synchronizing period, Y second being the longest duration from a possible point of time existing the synchronizing signal to the end of the synchronizing signal. That is, first to the scanning timing P5 at the time of detection of the synchronizing signal, the transmission/reception section 106 sets, as a reception period, Y second being a time duration from time T33 as a result of deducting a scanning timing cycle (P5 - P4) from the cycle of X second of the synchronizing signal to the end of the synchronizing signal. After the cycle thereafter, the transmission/reception section 106 sets a reception period of a cycle synchronizing the synchronizing signal with the same time width as the synchronizing signal from time T34. In this manner, the transmission/reception section 106 becomes able to set itself a reception period synchronous with the synchronizing signal, and in each of the reception periods, receives the synchronizing signal from the information processing device 109.

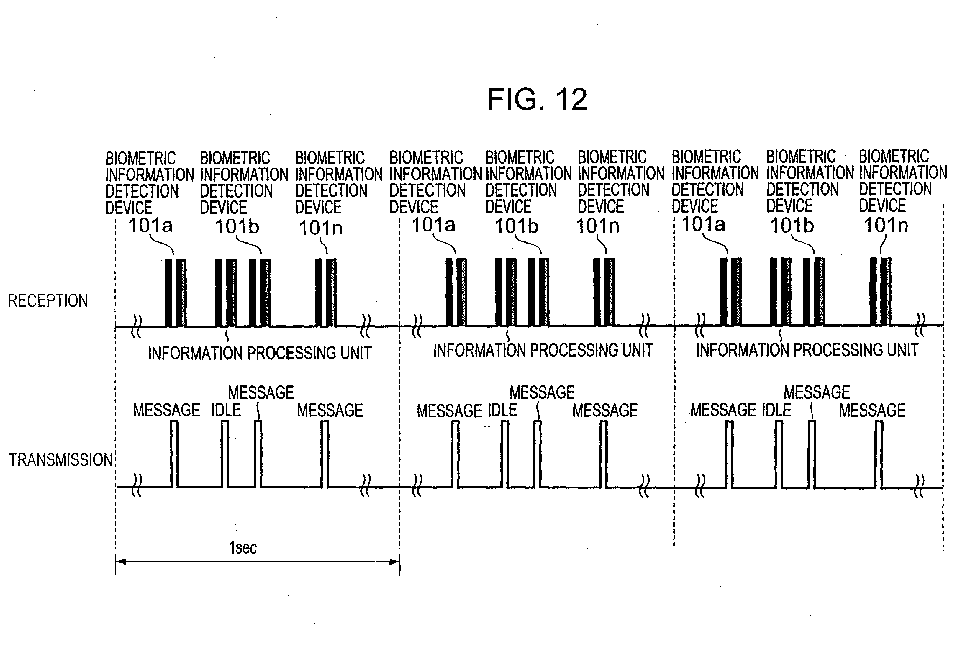

Fig. 12 is a timing chart showing signal transmission timings of the portable biometric information processing system shown in Fig. 1, and a timing chart showing the synchronous state under which communications synchronization is established between the biometric information processing device 100 and the information processing unit 113.

In the synchronous state shown Fig. 12, the biometric information detection devices 101a to 101n each operate to transmit a message (MESSAGE) indicating information of whether or not to perform a reception operation with their own time slots and to search for the next. Using the same signal format as the biometric information detection devices 101a to 101n, the information processing unit 113 also performs a reception operation using its own time slot and an operation to transmit a synchronizing signal (IDLE).

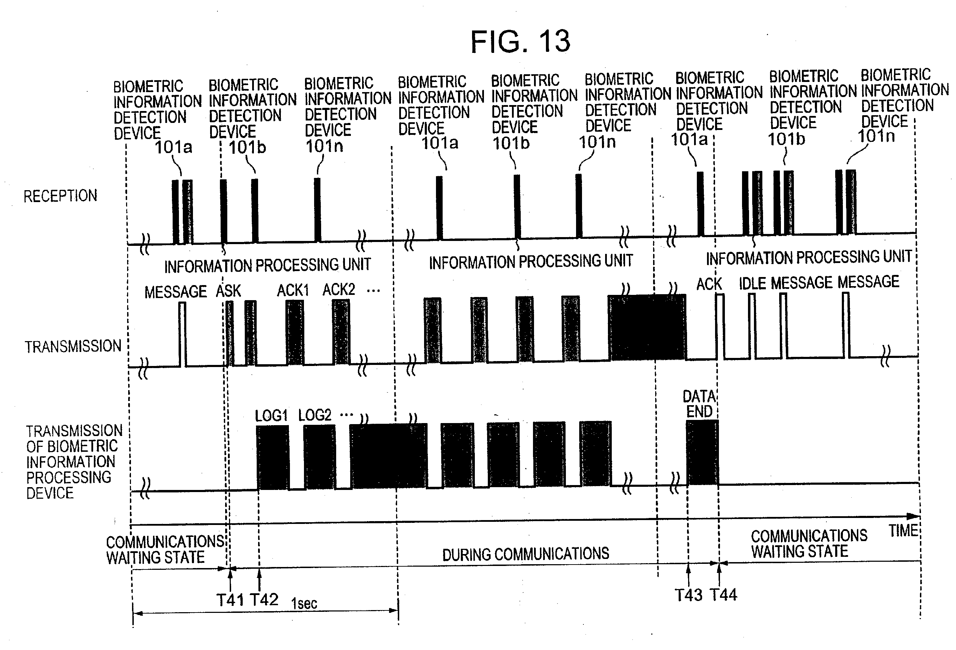

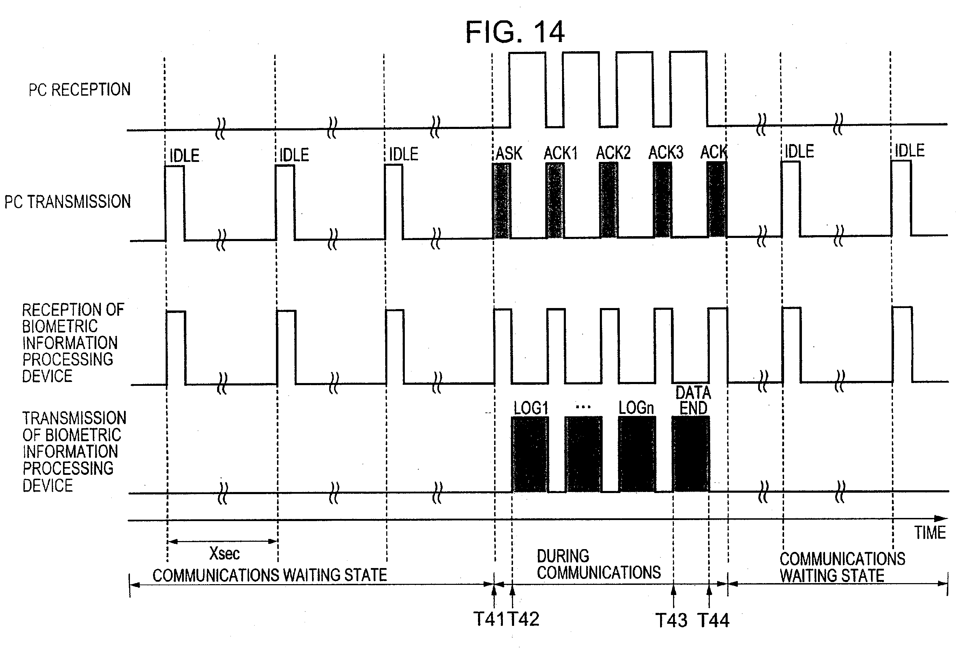

Fig. 13 is a timing chart showing the signal transmission timings of the portable biometric information processing system shown in Fig. 1, and a timing chart showing the operation of the entire system at the time of data transmission by the biometric information processing device 100 and the information processing unit 113. Fig. 14 is a timing chart showing the signal transmission timings of the portable biometric information processing system shown in Fig. 1, and a timing chart showing the part in detail of data transmission by the biometric information processing device 100 and the information processing unit 113. In the below, referring to Fig. 1, Fig. 13, and Fig. 14, described is the operation at the time of data transmission from the biometric information processing device 100 to the information processing unit 113.

In Fig. 13 and Fig. 14, as an initial state first, it is presumed that the biometric information processing device 100 and the information processing unit 113 are in the synchronous state. That is, the information processing unit 113 is wirelessly transmitting the synchronizing signal (idle) with a given predetermined cycle X second (1 second in the present embodiment). On the other hand, the biometric information processing device 100 includes a reception period of a timing synchronous with each of the synchronizing signals, and receives each of the synchronizing signals in each of the reception periods, and thus is considered in a state of waiting for data transmission (communications waiting state).

In.this state, at time T41, through operation of the information processing device 109, the information processing unit 113 transmits a data request signal (ASK) from the transmission/reception section 114 to the biometric information processing device 100.

In the biometric information processing device 100, in the reception period starting from time T41, when the transmission/reception section 106 receives the data request signal, at time T42, the transmission/reception section 106 starts transmitting data stored in the RAM 104 to the information processing unit 113. The transmission/reception section 106 transmits the transmission data after dividing the same at a predetermined length (log1, log2, ..., logn).

At this time, the information processing unit 113 wirelessly transmits an acknowledge signal (ACK1, ACK2, ..., ACKn) every time receiving the data of the predetermined length to the biometric information processing device 100. In response to the reception of the acknowledge signal, the biometric information processing device 100 determines that the last-transmitted data is made normal by the information processing unit 113, and thus operates to transmit the next data of the predetermined length.

At time T43, the biometric information processing device 100 transmits, from the transmission/reception section 106, a data transmission completion signal (Data End) after every data is completely transmitted.

After receiving the data transmission completion signal from the biometric information processing device 100 and after transmitting the acknowledge signal (ACK), the information processing unit 113 transmits the synchronizing signal (idle) with predetermined cycles, and then returns to the initial synchronous state (communications waiting state).

At time T44, after receiving the acknowledge signal, the biometric information processing device 100 sets itself the reception period synchronous with each of the synchronizing signals so as to synchronize with the information processing unit 113, and then returns to the initial synchronous state (communications waiting state).

Under this communications waiting state, for data transmission from the biometric information processing device 100 to the information processing unit 113, the above-mentioned operation is carried out again.

Herein, in the data transmission period from time T41 to time T44, the biometric information detection devices 101a to 101n each detect a signal from the biometric information processing device 100, and a signal from the information processing unit 113 in the corresponding reception period of the biometric information detection devices 101a to 101n. Therefore, no signal transmission is performed (for example, transmission of biometric data to the biometric information processing device 100).

As described in the foregoing, in the portable biometric information processing system of the present embodiment, in the data transmission system for wirelessly transmitting transmission data from a plurality of slave units to a master unit under TDMA scheme, the slave units (biometric information detection devices 101a to 101n) include, respectively, transmission/reception sections 110a to 110n for performing signal transmission and reception with the master unit (biometric information processing device 100), and control sections 108a to 108n for setting, if a predetermined signal is not detected by the transmission/reception sections 110a to 110n longer than a predetermined length of time, their own communications channels within the predetermined length of time in a frame, and transmitting the transmission data to the master unit using the communications channels. The predetermined signal is a signal to be transmitted and received between other slave units and the master unit.

Therefore, the biometric information detection devices 101a to 101n side look for any vacant channel, so that process centralization to the biometric information processing device 100 can be prevented.

Here, the control sections 108a to 108n of the slave units 101a to 101n each transmit an identification code to the master unit 100, and after receiving an enabling signal.(ACK) from the master unit 100, transmits the transmission data to the master unit 100. When determining that the identification codes received from the slave units 101a to 101n are normal identification codes, the master unit 100 transmits the enabling signal to the slave units 101a to 101n corresponding to the identification codes. Further, when receiving the enabling signal in the first reception period 301 of a predetermined width provided before the information transmission period 304 to which the transmission data is transmitted, the control sections 108a to 108n of the slave units 101a to 101n transmit the transmission data to the master unit 100.

Further, the portable biometric information processing systemof the present embodiment includes storage means (control sections 108a to 108n) for storing the channel change condition, and the control sections 108a to 108n of the slave units 101a to 101n respectively change the communications channel when detecting, in the first reception period 301 or the second reception period 302 of a predetermined width provided after the information transmission period 304, that the channel change condition previously set to the storage means is satisfied.

As such, the communications channel is changed when the interference condition is satisfied, easing to structure interference-resistant system. Therefore, the noise-resistance can be improved.

Herein, the channel change condition in the first reception period 301 and that of the second reception period 302 are so set as to be different from each other.

Further, the channel change condition denotes the frequency of interference detection in the first reception period 301 and the second reception period 302, and as the channel change condition, the frequency of interference detection is differently set in number between the first reception period 301 and the second reception period 302.

Accordingly, such a situation that a plurality of slave units simultaneously go through a channel change process and resultantly cause mutual interference again with any new channel can be prevented.

Still further, the storage means (control sections 108a to 108n) for storing the channel shift condition is included, andwhen detecting that the channel shift condition is satisfied in the third reception period 303 of a predetermined time width provided after the information transmission period, the control sections 108a to 108n of the slave units 101a to 101n are each so structured as to shift their own communications channels by a predetermined length of time. Therefore, it becomes possible to accommodate more slave units.

Still further, the first reception period 301 is so set as to be different from the sum of the second reception period 302 and the third reception period 303. Also with such a setting, such a situation that a plurality of slave units simultaneously go through channel change and resultantly cause mutual interference again with any new channel can be prevented

Still further, when detecting any interference at least in the first reception period 301 (that is, in any of the period of reception periods 301 to 303), the control sections 108a to 108n of the slave units 101a to 110n are each so structured as not to transmit the transmission data to the master unit 100. Accordingly, it can prevent transmission of unnecessary data.

Still further, the slave units 101a to 101n are used by being attached to bodies, and include the sensors 109a to 109n for detecting the biometric information about the bodies to which the units are attached. The control sections 108a to 108n wirelessly transmit the biometric information detected by the sensors 109a to 109n as transmission data by the transmission/reception section 110a to 110n. The master unit 100 includes the transmission/reception section 106 for wirelessly receiving the transmission data from the slave units 101a to 101n, and the control section 102 for processing the transmission data received from the slave units 101a to 101n. Therefore, this allows body control by using the biometric information such as heartbeat.

According to the present embodiment, provided are the wearable communications devices 101a to 101n suiting for the above-mentioned system.

Further, according to the present embodiment, in the data transmission system for performing data transmission between the information processing unit 113 with communications capability and the biometric information processing device 100, the information processing unit 113 is so structured as to transmit a synchronizing signal (idle) with a predetermined cycle X second, and the biometric information processing device 100 is so structured as to include reception periods synchronous with the synchronizing signal and having the same cycle, and to receive the synchronizing signal in each of the reception periods. With such a structure, synchronization is established under the communications waiting state in which no data transmission is performed.

Therefore, reduction of power consumption can be achieved for the information processing unit 113 and the biometric information processing device 100, and also wireless data transmission can be securely done between the information processing unit 113 and the biometric information processing device 100.

Further, because reduction of power consumption is possible, the communications waiting state can be retained for a long time, and whenever the user wants, data transmission is possible.

Moreover, there is no need to include any specific mode for communications with the information processing unit 113 on the side of the biometric information processing device 100, leading to simpler structure.

Still further, this makes it possible to structure the biometric information processing device 100 as a wearable communications device suiting for the data transmission system above.

Herein, as a method for establishing synchronization between the biometric information processing device 100 and the information processing unit 113, the communications means of the biometric information processing device 100 performs time-sequential scanning operation, so that when receiving the synchronizing signal coming from the information processing unit 113, a reception period of a timing synchronous with the synchronizing signal may be set to itself.

As another synchronizing method, when receiving the synchronizing signal by going through the scanning operation for a plurality of times with predetermined cycles, the communications means may set itself a reception period of a timing synchronous with the synchronizing signal.

Moreover, as a data transmission method, the information processing unit 113 may be so structured as to transmit a data request signal (ACK) at a timing synchronous with the synchronizing signal, and the storage means of the biometric information processing device 100 include transmission data stored therein, and the communications means transmit the data stored in the storage means responding to the data request signal received in the reception period.

After receiving a data transmission completion signal (Data End) from the biometric information processing device 100 and transmitting an acknowledge signal (ACK), the information processing unit 113 may transmit the synchronizing signal with the predetermined cycles, and the communications means of the biometric information processing device 100 may transmit the data transmission completion signal after the data transmission is completed, and after receiving the acknowledge signal, set itself the reception period synchronous with the synchronizing signal.

In the present embodiment, as the data transmission system, exemplified is a case where the biometric data is wirelessly transmitted from the biometric information processing device 101 to the information processing unit 113. However, application is possible to a data transmission system for performing data transmission between electrical devices including other communications capabilities.

In the present embodiment, exemplified is the biometric information processing system for executing a display process, and the like, by detecting biometric information such as heartbeat. However, application is possible to a data transmission system such as health control system, for example, for performing health control by counting the number of steps of the user.

According to the present invention, process centralization to a master unit can be prevented at the time communications channel setting to slave units.

Further, according to the present invention, even if the number of slave units is increased, communications interference among the slave units can be suppressed.

Still further, according to the present invention, it is possible to increase noise-resistance.

Still further, according to the present invention, in a data transmission system for performing data transmission among a plurality of electrical devices including communications capabilities, it becomes possible to reduce power consumption of the electrical devices, and also to securely perform data transmission among the electrical devices.

Still further, according to the present invention, it becomes possible to provide a wearable communications device suiting for the data transmission system described in the above.

## Claims

1. A data transmission system comprising:
a master unit; and
a plurality of slave units for wirelessly transmitting transmission data to the master unit under TDMA scheme, wherein each of the slave units includes communications means for performing signal transmission and reception with the master unit, and control means for setting, when the communications means does not detect a predetermined signal longer than a predetermined length of time, an own communications channel within the predetermined length of time in a frame to transmit transmission data to the master unit using the communications channel.

2. A data transmission system according to claim 1 comprising:
wherein the control means of each of the slave units transmits identification information to the master unit, and also transmits the transmission data to the master unit after receiving an enabling signal from the master unit, and
wherein the master unit transmits the enabling signal to any of the slave units corresponding to the identification information, when determining that the identification information received from each of the slave units is normal identification information.

3. A data transmission system according to claim 1 comprising:
wherein the control means of each of the slave units transmits the transmission data to the master unit, when receiving the enabling signal in a first reception period of a predetermined time width provided before an information transmission period in which the transmission data is transmitted.

4. A data transmission system according to claim 3 further comprising:
storage means for storing a channel change condition, wherein in a second reception period of a predetermined time width provided after the first reception period or the information transmission period, the control means of each of the slave units changes the communications channel when detecting that the channel change condition previously set in the storage means is satisfied.

5. A data transmission system according to claim 4 comprising:
wherein the channel change condition of the first reception period and that of the second reception period are so set as to be different from each other.

6. A data transmission system according to claim 5 comprising:
wherein the channel change condition is an interference detection frequency in the first reception period and the second reception period, and as the channel change condition, the interference detection frequency in the first reception period and that of the second reception period are set each to a different number.

7. A data transmission system according to claim 4 further comprising:
storage means for storing a channel shift condition, wherein in a third reception period of a predetermined time width provided after the information transmission period, when detecting that the channel shift condition is satisfied, the control means of each of the slave units shifts its own communications channel by a predetermined length of time.

8. A data transmission system according to claim 7 comprising:
wherein the first reception period is so set as to be different from a total length of the second reception period and third reception period.

9. A data transmission system according to claim 4 comprising:
wherein the control means of each of the slave units does not transmit the transmission data to the master unit, when detecting any interference at least in the first reception period.

10. A data transmission system according to claim 1 comprising:
wherein each of the slave units includes a sensor attached to a body for use and for detecting biometric information about the attaching body, and the control means wirelessly transmits the biometric information detected by the sensor as the transmission data using the communications means, and
wherein the master unit includes communications means for wirelessly receiving the transmission data coming from each of the slave units, and processing means for processing the transmission data received from each of the slave units.

11. A data transmission system according to claim 1 further comprising:
an information processing device for receiving the transmission data from the master unit, wherein the information processing device transmits a synchronizing signal with given cycles, and the master unit includes a reception period synchronous with each of the synchronizing signals for receiving the synchronizing signals in each of the reception periods.

12. A data transmission system according to claim 11 comprising:
wherein the master unit includes storage means for storing at least the identification information, and when receiving the synchronizing signal including the identification information stored in the storage means, the communications means of the master unit sets itself a reception period of a timing synchronous with the synchronizing signal.

13. A data transmission system according to claim 12 comprising:
wherein the communications means of the master unit sets itself the reception period of the timing synchronous with the synchronizing signal, when receiving the synchronizing signal through a time-continuous scanning operation.

14. A data transmission system according to claim 12 comprising:
wherein the communications means of the master unit sets itself the reception period of the timing synchronous with the synchronizing signal, when receiving the synchronizing signal through the scanning operation for a plurality of times with predetermined cycles.

15. A data transmission system according to claim 12 comprising:
wherein the information processing device transmits a data request signal at a timing synchronous with the synchronizing signal, and
the storage means of the master unit includes the transmission data stored therein, and in response to the data request signal received in the reception period, the communications means of the master unit transmits the data stored in the storage means.

16. A data transmission system according to claim 15 comprising:
wherein the information processing device transmits the synchronizing signal with the predetermined cycle, after receiving from the master unit a data transmission completion signal and transmitting an acknowledgement signal, and
wherein the communications means of the master unit sets itself the reception period synchronous with the synchronizing signal, after transmitting the data transmission completion signal and receiving the acknowledgement signal subsequent to completion of data transmission.

17. A wearable communications device comprising:
communications means for performing signal transmission and reception with a master unit under TDMA scheme; and
control means for setting, when the communications means does not detect a predetermined signal longer than a predetermined length of time, an own communications channel within the predetermined length of time in a frame to transmit transmission data to the master unit using the communications channel by the communications means.

18. A wearable communications device according to claim 17 comprising:
wherein the control means transmits identification information to the master unit, and also transmits the transmission data to the master unit after receiving an enabling signal from the master unit.

19. A wearable communications device according to claim 17 comprising:
wherein the control means transmits the transmission data to the master unit, when receiving the enabling signal in a first reception period of a predetermined time width provided before an information transmission period in which the transmission data is transmitted.

20. A wearable communications device according to claim 19 furthre comprising:
storage means for storing a channel change condition, wherein in a second reception period of a predetermined time width provided after the first reception period or the information transmission period, the control means changes the communications channel when detecting that the channel change condition previously set in the storage means is satisfied.

21. A wearable communications device according to claim 20 comprising:
wherein the channel change condition of the first reception period and that of the second reception period are so set as to be different from each other.

22. A wearable communications device according to claim 21 comprising:
wherein the channel change condition is an interference detection frequency in the first reception period and the second reception period, and as the channel change condition, the interference detection frequency in the first reception period and that of the second reception period are set each to a different number.

23. A wearable communications device according to claim 20 further comprising:
storage means for storing a channel shift condition; wherein in a third reception period of a predetermined time width provided after the information transmission period, when detecting that the channel shift condition is satisfied, the control means shifts its own communications channel by a predetermined length of time.

24. A wearable communications device according to claim 23 comprising:
wherein the first reception period is so set as to be different from a total length of the second reception period and third reception period.

25. A wearable communications device according to claim 20 comprising:
wherein the control means does not transmit the transmission data to the master unit, when detecting any interference at least in the first reception period.

26. A wearable communications device according to claim 17 further comprising:
a sensor attached to a body for detecting biometric information thereabout; and
wherein the control means wirelessly transmits the biometric information detected by the sensor as the transmission data using the communications means.

27. A data transmission system comprising:
a master unit; and
a plurality of salve units for wirelessly transmitting transmission data to the master unit under TDMA scheme, wherein each of the slave units includes a communications circuit for performing signal transmission and reception with the master unit, and a controller for setting, when the communications circuit does not detect a predetermined signal longer than a predetermined length of time, an own communications channel within the predetermined length of time in a frame to transmit transmission data to the master unit using the communications channel.

28. A wearable communications device comprising:
a communications circuit for performing signal transmission and reception with a master unit under TDMA scheme; and
a controller for setting, when the communications circuit does not detect a predetermined signal longer than a predetermined length of time, an own communications channel within the predetermined length of time in a frame to transmit transmission data to the master unit using the communications channel by the communications circuit.
